Europäisches Patentamt

European Patent Office

Office européen des brevets

(19)

(11) Numéro de publication: **0 002 632**
**B1**

(12) **FASCICULE DE BREVET EUROPEEN**

(45) Date de publication du fascicule de brevet: **12.08.81**

(51) Int. Cl.³: **F 16 D 65/54** //H02K7/102

(21) Numéro de dépôt: **78400204.0**

(22) Date de dépôt: **01.12.78**

(54) Dispositif de rattrapage d'usure pour frein et frein pourvu de ce dispositif.

(30) Priorité: **12.12.77 FR 7738527**

(43) Date de publication de la demande:
**27.06.79 Bulletin 79/13**

(45) Mention de la délivrance du brevet:
**12.08.81 Bulletin 81/32**

(84) Etats Contractants Désignés:
**CH DE FR GB IT SE**

(56) Documents cités:
**DE - A - 2 314 483**
**FR - A - 2 030 999**
**FR - A - 2 164 590**
**US - A - 2 210 336**

(73) Titulaire: **VERLINDE, Société Anonyme**
**19 Rue Danton**
**F-59120 Loos (FR)**

(72) Inventeur: **Dorot, Henri Joseph Jacques**
**6, rue Albert Samain**
**F-59139 Wattignies (FR)**

(74) Mandataire: **Ecrepont, Robert Pierre**
**12 Place Simon Vollant**
**F-59800 Lille (FR)**

Courier Press, Leamington Spa, England.

### Dispositif de rattrapage d'usure pour frein et frein pourvu de ce dispositif

L'invention se rapporte à un dispositif de rattrapage automatique de l'usure dans un frein à disques à machoires flottantes et au frein pourvu de ce dispositif. L'invention concerne plus particulièrement mais non exclusivement un tel frein du type destiné à freiner l'arbre d'un moteur électrique sur lequel est calé le disque dont le desserrage est électromagnétique.

On sait que dans ce type de frein (brevet français N° 1 479 234) les machoires peuvent coulisser axialement par rapport à l'arbre moteur, chacune d'un côté du disque. Pour cela, sur l'une des machoires, est fixée l'une des extrémités de guides parallèles à l'axe de l'arbre et aptes à coulisser dans les logements éxecutés spécialement, tant dans un support solidarisé au carter du moteur que dans l'autre machoire, qui sont tous deux traversés par ces guides dont l'extrémité opposée à celle associée à la première machoire traverse à son tour des logements de la culasse de l'electro-aimant avant de recevoir un moyen interdisant le recul de cette culasse hors des guides.

La deuxième machoire dite machoire avant, forme l'armature de l'electro-aimant. Entre la machoire avant et la culasse de l'electro-aimant sont intercalés des ressorts de pression. Avec un tel frein, quand l'electro-aimant est alimenté, la machoire avant est attirée vers la culasse et s'écarte du disque, ce qui libère celui-ci.

Des moyens de compensation tels des ressorts interposés entre les machoires et ce de chaque côté du support sont généralement prévus, afin que la machoire avant ne s'écarte de la face correspondante du disque que d'une distance sensiblement égale à la moitié de l'entrefer de l'electro-aimant pour que la course restante de cet electro-aimant soit faite par la culasse qui se rapprochera alors de la machoire avant comme du disque et permettra ainsi à la première machoire ou machoire arrière de s'écarter de l'autre face du disque d'une même distance.

Quand l'action de l'electro-aimant cesse, la machoire avant subissant directement l'action des ressorts de pression alors que la machoire arrière la subit indirectement par l'intermédiaire des guides, ces machoires viennent serrer le disque et assurer le freinage de l'arbre moteur. Au fur et à mesure de l'utilisation, les garnitures des machoires subissent une certaine usure; la course devenant plus grande: d'une part le temps de réponse est plus ou moins long et, d'autre part, les ressorts de pression sont de moins en moins comprimés et leur action devient moins efficace.

Dans le même temps, l'entrefer augmente et de ce fait, à un certain moment, le champ magnétique risque de ne plus être suffisant pour attirer l'armature.

Afin de pallier ces inconvénients, ces freins doivent être pourvus de moyens de rattrapage d'usure, soit nécessitant un réglage manuel (certificat d'addition français N° 95911 du brevet français n° 1479234), ce qui malheureusement nécessiterait une surveillance périodique de freins pour mesurer leur usure en vue d'agir sur les divers moyens de réglage avant que cette usure soit excessive, soit agissant automatiquement (demande de brevet français n° 2030999 ainsi que demande de brevet allemand n° 2314483) dès que l'usure des garnitures atteint un certain seuil, ce qui est préférable. Dans ces documents, les moyens prévus à cet effet, qui en fait doivent limiter le recul de la machoire avant et de la culasse sur les guides, consistent, portées par la machoire avant et la culasse, en des billes ou en des rondelles coniques devant se coincer automatiquement sur les guides lorsque leur déplacement s'effectue dans le sens où elles s'écartent du disque du frein alors qu'elles libèrent les guides dans le sens inverse.

Malheureusement, avec ces moyens connus, le coincement obtenu ne produit pas une force d'adhérence suffisante pour résister aux fortes poussées axiales nécessaires au freinage.

De plus, au repos, des vibrations ou des chocs peuvent déplacer ce rondelles sur les guides et par exemple leur interdire ensuite le recul nécessaire au desserrage du frein. Pour résister à de fortes poussées axiales, il est connu de réaliser des guides qui ne sont pas lisses mais présentent des crémaillères en dents de scie coinçant positivement les rondelles dans le sens convenable.

Malheureusement, comme pour obtenir "un fin réglage", la crémaillère doit avoir un pas trop faible pour que la face de butée de chaque cran puisse être suffisamment inclinée pour tolérer un léger recul des machoires après passage d'un cran, il arrive que le désserrage du frein soit incomplet. Dans le domaine des freins à tambour au coeur desquels une partie fixe porte les axes de sabots de frein, il est connu (brevet US-A-2210 336) d'interposer entre chaque sabot et la partie fixe un dispositif de rattrapage d'usure comprenant un coin qui, sous la sollicitation d'un ressort s'engage progressivement entre les extrémités en vis à vis de deux bras associés l'un au sabot, l'autre à la partie fixe. Malheureusement, ce dispositif ne peut se transposer dans le domaine des freins à disques à machoires flottantes qui sont de conception totalement différente.

Un résultat que l'invention vise à obtenir est un dispositif de reglage automatique d'un frein qui soit utilisable pour des engins où l'effort de freinage est important, et qui garantit de toujours disposer d'un jeu suffisant pour le desserrage des machoires.

A cet effet, elle a pour objet un dispositif du type précité qui, afin de limiter l'éloignement de la machoire avant et de la culasse par rapport au disque, est caractérisé en ce qu'il comprend, sur chaque guide, deux butées et deux coins disposés de manière telle que la machoire avant et la culasse ont chacune celle de leurs faces qui est située à l'opposé du disque qui ne s'appuie sur l'une de ces butées que par l'intermédiaire de l'un des coins, lesquels sont sollicités en vue de s'engager, automatiquement, chacun plus largement entre la face et la butée correspondante dès que celles-ci, suite à usure, s'écartent l'une de l'autre mais sans pour autant que le coin provoque lui-même ledit écartement.

L'invention sera bien comprise à l'aide de la description ci-après faite, à titre d'exemple non limitatif, en regard du dessin ci-annexé qui représente schématiquement:

Figure 1: le frein vu en coupe par l'axe d'un guide mais sans son support et ses ressorts de compensation en eux-mêmes bien connus;

Figure 2: en vue partielle, une variante de réalisation de ce frein.

Ce frein comprend deux machoires 1, 2 agissant de part et d'autre d'un disque 3 calé sur un arbre moteur (non représenté). Evidemment, entre chacune des faces du disque 3 et la machoire 1 ou 2 correspondante, est intercalée une garniture de frein 4 ou 5 par exemple collée sur cette machoire. Sur l'une des machoires, celle dite machoire arrière 2, est fixée l'une (6) des extrémités de guides 7 parallèles à l'axe de l'arbre moteur et aptes à coulisser dans les logements 9 spécialement exécutés tant dans un support (non représenté) solidarisé au carter du moteur (non représenté) que dans l'autre machoire, ou machoire avant 1.

Après avoir ainsi traversé le support et la machoire avant ces guides, par leur extrémité 11 opposée à celle associée à la machoire arrière 2, traversent encore des logements 12 de la culasse 13 d'un électro-aimant 14 avant de recevoir un moyen qui sera décrit plus loin, interdisant le recul de cette culasse 13 hors des guides 7.

Entre la machoire avant 1, formant l'armature de l'electro-aimant 14, et la culasse 13 de cet electro-aimant, sont intercalés des ressorts de pression 16.

Avec un tel frein, quand l'electro-aimant 14 est alimenté, la machoire avant 1 est attirée vers la culasse 13 et s'écarte du disque 3.

Des ressorts dits de compensation (non représentés) sont interposés entre les machoires 1, 2 et ce, de chaque côté du support précité qui est situé dans le plan du disque.

Grâce à ces ressorts, les machoires 1 et 2 s'écartent symétriquement du disque 3.

Avec un tel frein, au fur et à mesure d'une utilisation qui se ferait sans réglage, chacune des garnitures 4, 5 subirait une usure U/2 et la valeur de l'entrefer "E" deviendrait plus grande du double de cette usure.

C'est pourquoi, le frein nécessite alors un réglage de cet entrefer.

De manière classique, en vue d'obtenir le réglage automatique de cet entrefer, on limite l'éloignement par rapport au disque 3 tant de la machoire avant 1 que de la culasse 13.

A cet effet, selon une caractéristique de l'invention, ces pièces 1, 13 ont chacune celle (17 ou 18) de leurs faces qui est située à l'opposé du disque qui, à chaque guide 7 s'appuie indirectement sur une butée 19 ou 20 portée par le guide correspondant. Cet appui est indirect en ce qu'il s'opère par l'intermédiaire d'un coin 21 ou 22 sollicité en vue de s'engager automatiquement plus largement entre la face 17 ou 18 et cette butée 19 ou 20.

Par exemple, cette sollicitation peut être limitée à l'action de la pesanteur, pour autant bien entendu, que le coin est monté dans le sens convenant à cette action, c'est-à-dire avec sa grande base au-dessus de sa petite base, mais dans un mode préféré, afin de permettre un montage dans n'importe quel sens, cette sollicitation résulte de l'action d'un élement élastique tel un ressort 25 ou 26 intercalé entre la tête ou grande base du coin et une ferrure 27 fixée au guide 7.

Par ailleurs, peuvent également être avantageusement prévus des moyens interdisant tout déplacement intempestif des pièces 1 et 13 sur les guides 7 par exemple, suite à des vibrations ou à des chocs, car ces déplacements conduiraient aussi à une pénétration hâtive des coins.

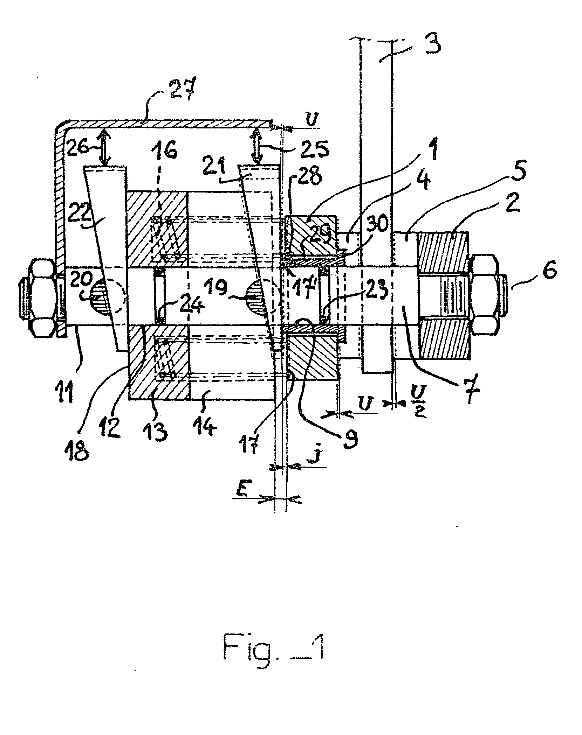

Dans l'exemple représenté figure 1, ces moyens consistent chacun en un joint torique 23 ou 24, en matériau peu compressible.

Dans un mode préféré de réalisation, les butées 19, 20 sont orientables, afin que chacune d'elles se place correctement par rapport à la pente du coin.

Par exemple, à cet effet, ces butées consisteront chacune en un tronçon de profilé cylindrique engagé dans un perçage radial du guide et présentant au moins localement un méplat.

Avantageusement, ce méplat se situera dans le plan axial du profilé.

Quant au coin, il peut alors être formé par un simple cavalier en tôle pliée entre les branches, duquel passerait le guide.

Des moyens sont évidemment prévus afin que malgré le rattrapage automatique de l'usure, l'entrefer "E" reste toujours suffisant pour un desserrage effectif du frein.

A cet effet, dans la forme de réalisation représentée figure 1, la machoire avant est montée sur chaque guide par l'intermédiaire d'une bague 28 dont la face arrière réalise une fraction 17' de la face 17 par laquelle la machoire appuie sur le coin 21.

Cette bague est elle-même montée coulissante dans un perçage 29 de cette machoire et, d'une part, elle est terminée à l'avant, c'est à dire du côté du disque, par une collerette 30 réalisant une butée qui, lorsque la machoire 1 est à son contact, empêche cette machoire 1 de se déplacer vers le disque, sans entraîner avec elle ladite bague 28 et, d'autre part, a sa partie décolletée qui a une longueur supérieure à l'épaisseur de la machoire d'une valeur "J".

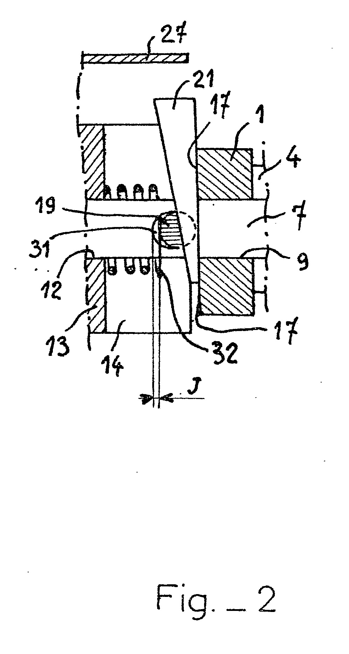

De ce fait, lorsque le coin est en appui sur la face de la bague, la machoire peut encore reculer vers le coin de cette valeur qui est au moins suffisante au desserrage du frein. Dans une autre forme de réalisation (figure 2), l'assurance d'un entrefer suffisant pour le desserrage du frein est obtenu grâce au jeu "J" qui dans une direction parallèle à l'axe des guides 7 est laissé aux butées 19 de la machoire avant dans le perçage 31 qui leur est réservé dans chaque guide 7.

Afin que ce jeu ne soit pas absorbé par descente des coins 21, chaque butée 19 est elle-même sollicitée vers la machoire avant par un élément élastique 32 tel un ressort engagé sur le guide 7.

Plutôt que sur un pièce solidaire du guide, ce ressort prendra de préférence appui sur la culasse 13 de l'electro-aimant 14, ce qui évitera ainsi tout mouvement intempestif de cette culasse sans qu'il soit nécessaire de monter les joints toriques évoqués plus haut.

La force fournie par ce ressort est juste suffisante pour lutter contre la sollicitation inverse que la butée reçoit par le coin 21. Elle est donc très nettement inférieure à la force des ressorts de pression 16 et de l'electro-aimant 14.

Le fonctionnement de ce frein à rattrapage automatique de l'usure est le suivant:

— lors du freinage, la culasse 13 prenant appui sur le coin 22, sous l'action des ressorts de pression 16, la machoire avant est poussée vers la machoire arrière 2 pour qu'ensemble, elles pincent le disque 3.

— si lors du freinage, les garnitures subissent une certaine usure par exemple chacune de la valeur U/2, la machoire 1 recevant la poussée des ressorts 16 avance par rapport au guide de la valeur U, ce qui écarte la butée 19 de la machoire avant 1 et permet au coin 21 de s'engager plus largement (voir pointillés).

— lors du desserrage ultérieur du frein, du fait du coin, la machoire avant ne pourra plus, sous l'action de l'électro-aimant, que reculer de la valeur du jeu "J" offert par la bague 28 ou par le logement 31, ce qui est suffisant pour libérer le disque;

— du fait de l'usure précédente, la machoire avant ayant progressé, l'entrefer "E" est supérieur à ce jeu J;

— sous l'action de l'electro-aimant, l'absorption de l'entrefer "E" étant totale, après epuisement du jeu J, ce sera la culasse 13 qui se rapprochera de la machoire avant écartant ainsi sa face arrière 18 de la butée 20 permettant ainsi au coin 22 de s'engager plus largement.

## Revendications

1. Dispositif automatique de rattrapage d'usure dans un frein à machoires flottantes (1, 2) agissant de part et d'autre d'un disque bloqué en translation, comprenant, fixés par l'une de leurs extrémités sur l'une des machoires dite machoire arrière (2), des guides parallèles à l'axe du disque (3) et qui traversent, en y coulissant les logements (9) que présentent à cet effet une autre machoire, dite machoire avant (1), et une culasse (13) avant de recevoir un moyen (20) interdisant l'échappement de cette culasse (13) hors de ces guides (7), dans lequel frein, outre des éventuels moyens destinés à répartir de part et d'autre du disque (3) la valeur de la course de desserrage (E), sont évidemment prévus des moyens (14, 16) commandant tantôt, l'attraction, l'une vers l'autre de la machoire avant et de la culasse et, tantôt, l'écartement de ces deux pièces, ce dispositif de rattrapage d'usure agissant par limitation de l'éloignement de la machoire avant et de la culasse par rapport au disque, étant caractérisé en ce qu'il comprend sur chaque guide (7) deux butées (19, 20) et deux coins (21, 22) disposés de manière telle qu'à chaque guide, la machoire avant (1) et la culasse (13) ont chacune celle de leurs faces qui est située à l'opposé du disque qui ne s'appuie, sur l'une des butées (19, 20) que par l'intermédiaire de l'un des coins (21, 22), lesquels de plus, sont sollicités en vue de s'engager automatiquement, chacun plus largement entre la face (17, 18) et la butée (19, 20) correspondante dès que celles-ci, suite à usure, s'écartent l'une de l'autre, mais ceci sans pour autant que le coin provoque lui-même ledit écartement.

2. Dispositif selon la revendication 1, caractérisé en ce que la machoire avant (1) est montée sur chaque guide (7) par l'intermédiaire d'une bague (28) dont la face arrière (17') réalise une fraction de la face (17) par laquelle la machoire appuie sur la butée, cette bague (28), qui est elle -même montée coulissante dans un perçage (29) de la machoire avant (1), étant d'une part, terminée du côté du disque par une collerette (30) réalisant une butée, et, d'autre part, posséde une partie décolletée d'une longueur supérieure, d'une certaine valeur (J), à l'épaisseur de la machoire avant, afin que lorsque la collerette (30) est en butée, la face arrière de la bague soit en saillie par rapport à la face arrière (17) de la machoire qui pourrait encore reculer de cette valeur, qui est choisie, au moins suffisante pour le desserrage du frein.

3. Dispositif selon l'une quelconque des revendications 1 et 2, caractérisé en ce que, en vue d'être sollicité comme ci-dessus exposé, le coin (21, 22) est placé avec sa grande base au-dessus de sa petite base.

4. Dispositif selon l'une quelconque des revendications 1 ou 2, caractérisé en ce qu'entre la grande base du coin (21, 22) et un appui (27) solidaire du guide (7) est intercalé un élement élastique (25, 26).

5. Dispositif selon l'une quelconque des revendications 1 à 4, caractérisé en ce qu'entre la face interne de chacun des logements (9) présentés par la culasse (13) et la machoire avant (1) et la face externe des guides (7) est prévu un moyen (23, 24) de freinage du coulissement dudit logement sur le guide.

6. Dispositif selon l'une quelconque des revendications 1 à 5, caractérisé en ce que chacune des butées (19, 20) est formée par un tronçon de profilé cylindrique engagé dans un perçage radial du guide et présentant au moins localement un méplat.

7. Dispositif selon l'une quelconque des revendications 1 à 6, caractérisé en ce que chaque coin (21, 22) est formé par un cavalier en tôle pliée entre les branches duquel cavalier passe le guide (7).

8. Dispositif selon l'une quelconque des revendications 1 et 3 à 7, caractérisé en ce que chacune des butées (19, 20) limitant le recul de la machoire avant est montée sur le guide (7) correspondant avec, dans une direction parallèle à l'axe du guide, un jeu de valeur J au moins suffisante au desserrage du frein, cette butée étant sollicitée vers le disque par un élement élastique 32.

9. Dispositif selon la revendication 8 caractérisé en ce que l'élement élastique (32) prend appui sur la culasse (13).

10. Frein à machoires flottantes caractérisé en ce qu'il comprend un dispositif de rattrapage d'usure, selon l'une quelconque des revendications 1 à 9.

## Claims

1. An automatic device for taking up wear in a brake having floating shoes (1, 2) which act on opposite sides of a disk which is locked in translation, which device comprises guides which are fixed by one of their ends to one of the shoes, known as the rear shoe, (2) and are parallel to the axis of the disk (3), which guides slidably traverse the housings (9) provided in a further shoe, known as the front shoe (1), and a yoke (13) before receiving a means (20) preventing the release of this yoke (13) from these guides (7), in which brake, in addition to the possible means designed to distribute the value of the release stroke (E) on the two sides of the disk (3), there are provided means (14, 16) controlling both the attraction towards each other of the front shoe and the yoke and the movement away from each other of these two components, this device for taking up wear operating by limiting the spacing of the front shoe and the yoke with respect to the disk, characterised in that it comprises two stops (19, 20) and two wedges (21, 22) on each guide (7), these stops and wedges being disposed in such a way that on each guide, the front shoe (1) and the yoke (13) each have that surface which is disposed facing away from the disk supported only on one of the stops (19, 20) by means of one of the wedges (21, 22), which wedges are in addition biased in order to engage automatically, each one increasingly, between the surface (17, 18) and the corresponding stop (19, 20) as soon as these, as a result of wear, move away from one another, but without the wedge itself causing the said movement to occur.

2. A device as claimed in claim 1, characterised in that the front shoe (1) is mounted on each guide (7) by means of a ring (28) whose rear surface (17') provides a portion of the surface (17) by way of which the shoe bears on the stop, this ring (28), which is itself slidably mounted in a bore (29) of the front shoe (1), being, on the one hand, terminated on its side facing the disk by a flange (30) providing a stop and, on the other hand, having a cut-away portion which has a length greater than the thickness of the front shoe by a given value (J), in order that when the flange (30) is acting as a stop, the rear surface of the ring projects with respect to the rear surface (17) of the shoe which may then move back by this value which is selected to be at least sufficient for the release of the brake.

3. A device as claimed in any one of claims 1 and 2, characterised in that, in order to be biased as set out above, the wedge (21, 22) is positioned with its thick end above its thin end.

4. A device as claimed in any one of claims 1 and 2, characterised in that a resilient element (25, 26) is interposed between the thick end of the wedge (21, 22) and a support (27) rigid with the guide (7).

5. A device as claimed in any one of claims 1 to 4 characterised in that, between the internal surface of each of the housings (9) formed on the yoke (13) and the front shoe (1) and the external surfaces of the guides (7), a means (23, 24) for braking the sliding of the housing on the guide is provided.

6. A device as claimed in any one of claims 1 to 5, characterised in that each of the stops (19, 20) is formed by a section of cylindrical shape engaged in a radial bore of the guide and having at least locally a flattened portion.

7. A device as claimed in any one of claims 1 to 6, characterised in that each wedge (21, 22) is formed by a stable-shaped member of bent steel sheet between the arms of which the guide (7) passes.

8. A device as claimed in any one of claims 1 and 3 to 7, characterised in that each of the stops (19, 20) which limit the rearward movement of the front shoe is mounted on the corresponding guide (7) with, in a direction parallel to the axis of the guide, a clearance of value J which is at least sufficient for the release of the brake, this stop being urged towards the disk by a resilient element 32.

9. A device as claimed in claim 8, characterised in that the resilient element (32) bears on the yoke (13).

10. A floating shoe brake, characterised in that it comprises a device for taking up wear, as claimed in any one of claims 1 to 9.

## Patentansprüche

1. Automatische Vorrichtung zu Nachregeln bei Verschleiß in einer Schwimmbackenbremse (1, 2), die beiderseits einer gegen Verschiebung gesicherten Scheibe wirkt, mit parallel zur Scheibenachse (3) verlaufenden Führungen, die mit einem ihrer Enden auf einer der Backen — Hinterbacke (2) genannt — fixiert sind und welche die Lagerungen (9) in denselben gleitend durchqueren, die zu diesem Zweck eine weitere Backe — Vorderbacke (1) genannt — und ein Joch (13) vor Aufnahme eines das Entweichen dieses Joches (13) aus diesen Führungen (7) untersagendes Mittel (20) aufweisen, wobei in der Bremse außer eventueller Mittel zur Verteilung des Werts des Lösehubs (E) beiderseits der Scheibe (3) offensichtliche Mittel (14, 16) vorgesehen sind, die bald die gegenseitige Anziehung der Vorderbacke und des Joches, bald das Auseinanderbewegen dieser beiden Teile steuern, wobei diese Vorrichtung zum Nachstellen durch Begrenzung der Entfernung von der Vorderbacke und des Joches bezüglich der Scheibe wirkt, dadurch gekennzeichnet, daß sie auf jeder Führung (7) zwei Anschläge (19, 20) und zwei Keile (21, 22) aufweist, die so angeordnet sind, daß bei jeder Führung die Vorderbacke (1) und das Joch (13) jene ihrer Stirnseiten haben, die auf der der Scheibe abgewandten Seite angeordnet ist, welche sich an einem der Anschläge (19, 20) nur über einen der beiden Keile (21, 22) abstützt, von denen jeder zudem mit Hinblick auf seinen selbsttätigen Eingriff weiter zwischen die Stirnseite (17, 18) und dem entsprechenden Anschlag (19, 20) gedrängt werden, sobald diese infolge Verschleisses auseinanderbewegt werden, jedoch ohne daß darum besagtes Auseinanderbewegen vom Keil selbst hervorgerufen wird.

2. Vorrichtung nach Anspruch 1, dadurch gekennzeichnet, daß die Vorderbacke (1) auf jeder Führung (7) über einen Ring (28) angeordnet ist, dessen Rückseite (17') einen Teil der Seite (17) bildet, mit der die Backe auf dem Anschlag aufliegt, wobei dieser gleitend in einer Bohrung (29) der Vorderbacke (1) angebrachte Ring (28) einerseits auf der Scheibenseite von einem einen Anschlag bildenden Kragen (30) beendet wird, andererseits einen ausgeschnitten Teil einer Länge besitzt, die um einen bestimmten Wert (J) höher als die Dicke der Vorderbacke ist, damit, wenn der Kragen (30) in Anschlag ist, die Rückseite des Rings mit Bezug auf die Rückseite (17) der Backe vorsteht, die noch um diesen, zumindest für das Lösen der Bremse ausreichend gewählten Wert zurückweichen kann.

3. Vorrichtung nach einem der Ansprüche 1 und 2, dadurch gekennzeichnet, daß der Keil (21, 22) mit Hinblick darauf, wie oben dargelegt, beansprucht zu werden, mit der großen Basis über seiner kleinen Basis angeordnet wird.

4. Vorrichtung nach einem der Ansprüche 1 oder 2, dadurch gekennzeichnet, daß zwischen der großen Basis des Keils (21, 22) und einer mit der Führung (7) einstückig verbundenen Stütze (27) ein elastisches Element (25, 26) gelegt ist.

5. Vorrichtung nach einem der Ansprüche 1 bis 4, dadurch gekennzeichnet, daß zwischen der Innenseite jeder der vom Joch (13) und von der Vorderbacke (1) gebildeten Lagerungen (9) und der Außenseite der Führungen (7) ein Mittel (23, 24) für das Bremsen des Gleitens besagter Lagerung auf der Führung vorgesehen ist.

6. Vorrichtung nach einem der Ansprüche 1 bis 5, dadurch gekennzeichnet, daß jeder der Anschläge (19, 20) von einem Teilstück eines zylindrischen Profils gebildet wird, das in eine radiale Bohrung der Führung eingefügt ist und zumindest stellenweise eine Abflachung aufweist.

7. Vorrichtung nach einem der Ansprüche 1 bis 6, dadurch gekennzeichnet, daß jeder Keil (21, 22) von einem Reiter aus gebogenem Blech gebildet ist, zwischen dessen Schenkeln die Führung (7) hindurchgeht.

8. Vorrichtung nach einem der Ansprüche 1 und 3 bis 7, dadurch gekennzeichnet, daß jeder der die Zurückbewegung der Vorderbacke begrenzenden Anschläge (19, 20) auf der entsprechenden Führung (7) angebracht ist, mit einem in Richtung parallel zur Achse der Führung verlaufendem Spiel des Wertes J, das zumindest für das Lösen der Bremse ausreicht, wobei dieser Anschlag zu der Scheibe hin durch ein elastisches Element (32) beansprucht wird.

9. Vorrichtung nach Anspruch 8, dadurch gekennzeichnet, daß das elastische Element (32) auf dem Joch (13) zur Auflage kommt.

10. Schwimmbackenbremse, dadurch gekennzeichnet, daß sie eine Vorrichtung zum Nachregeln bei Verschleiß nach einem der Ansprüche 1 bis 9 aufweist.

Fig. _1

Fig. _ 2